# EUROPEAN PATENT APPLICATION

(11) **EP 2 725 209 A1**
(43) Date of publication of application: **30.04.2014**
(21) Application number: 12801963.5
(22) Date of filing: 15.06.2012
(51) Int. Cl.: F01N 3/04

(54) **SYSTEM FOR THE TREATMENT OF EXHAUST GASES FROM AN INTERNAL COMBUSTION ENGINE**

(30) Priority: 21.06.2011 ES 201100733 P
(71) Applicant: Álvarez Díaz, Jesús, 38430 Icod de los Vinos (Tenerife) (ES)
(72) Inventor: Álvarez Díaz, Jesús, 38430 Icod de los Vinos (Tenerife) (ES)
(74) Representative: González López-Menchero, Álvaro Luis
(86) International application number: PCT/ES2012/000184
(87) International publication number: WO 2012/175768

(57) **Abstract**

The invention is based on a modification to the exhaust system, in which: first, the gases are passed through a filter containing water, which is intended to eliminate the temperature of the exhaust gases; second, the gases are passed through ducts solidly connected to the exhaust manifold in order to eliminate any remaining vapours; and, in a third step, the gases are passed through a metal fibre filter soaked in oil, which is intended to eliminate solid residues and to lower the concentration of pollutants.

## Description

### TECHNICAL FIELD

The present invention is related to a modification to the conventional exhaust system of internal combustion engines, improving the quality of the gases expelled into the atmosphere.

### PRIOR ART

The internal combustion engine is a type of machine that obtains mechanical energy directly from the chemical energy of a fuel that burns inside a combustion chamber. When combustion occurs in an enclosed space, it is referred to as an internal combustion engine. The production of that mechanical energy with the combustion of a fuel entails the production and expulsion to the exterior of so-called combustion gases.

Pollution standards usually focus on measuring the pollutants in these gases.

The increase of any type of combustion involves the increase of pollutants in the environment due to the increase of concentrations of the aforementioned elements in reference to those which exist in nature in their own natural proportion.

The invention proposes the objective of creating an added element for conventional exhaust pipes to reduce the outlet temperature of the gases and then reducing the content of particles and other pollutants.

### DISCLOSURE OF THE INVENTION

The present invention achieves said objective by means of a composite system in which the gases are first passed through a filter containing water, including a radiator for cooling thereof; second, the gases are passed through one or several individual ducts added to the actual manifold and attached integrally with the outlet ducts of the manifold in order to eliminate the possible residual water in liquid or mist phase present in the gases; and third, the resulting gases are passed through a preferably metal fiber filter soaked in oil. After these three steps, the gases exit to the exterior through the conventional expulsion system.

### DESCRIPTION OF THE DRAWINGS

The object of the invention is explained below by way of example by means of embodiments depicted in the drawings which are shown:
Figure 1 shows a section resulting from making a longitudinal cut in the cooling system for cooling the outlet gases.

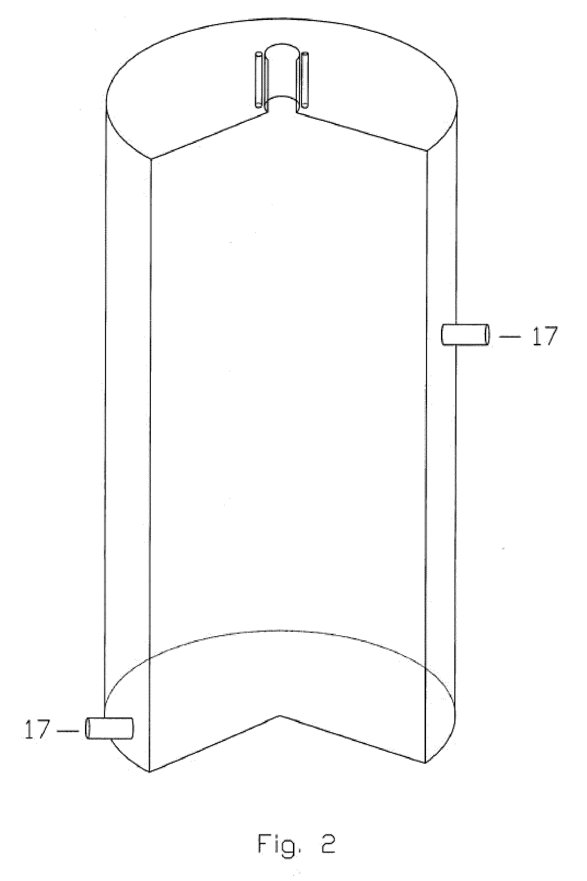

Figure 2 shows a perspective view of the cooling system.
Figure 3 shows an exploded view of the cooling system, specifically, the capsule (4).

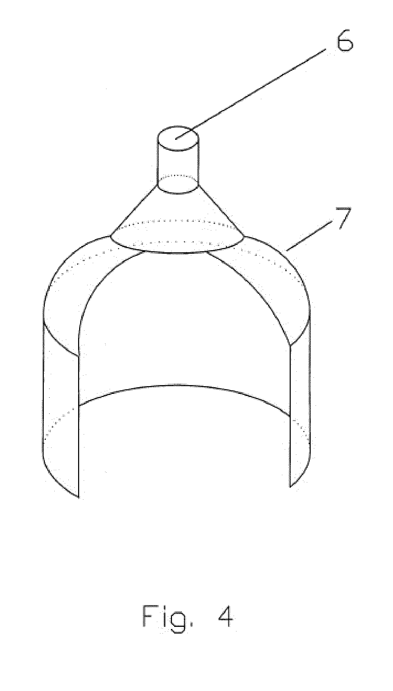

Figure 4 shows the hood (7) for concentrating gases through which said gases will pass once they leave the water filter.
Figure 5 shows the preferably steel sheet or fiber filter soaked in oil.
Figure 6 shows the modification to be made to the conventional exhaust manifold of the manufacturer and exclusive for each model so that the exchange of heat between the gases expelled by the engine and the gases cooled and filtered in the filter containing water, depicted in Figure 1, can take place.

### DETAILED DISCLOSURE OF THE INVENTION

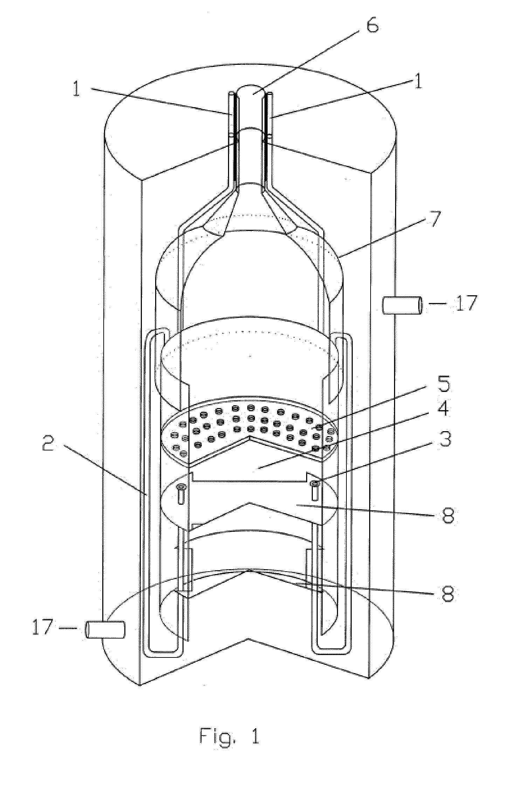

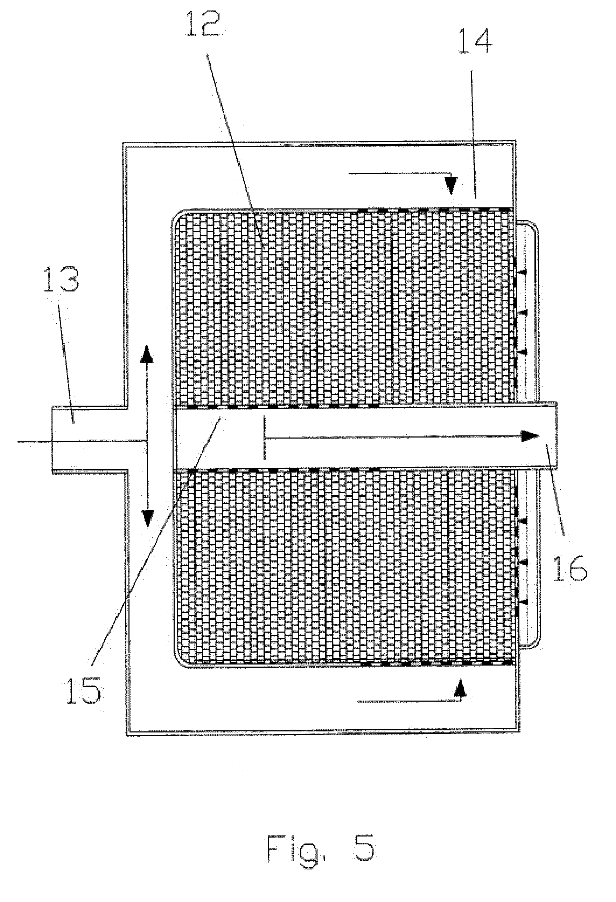

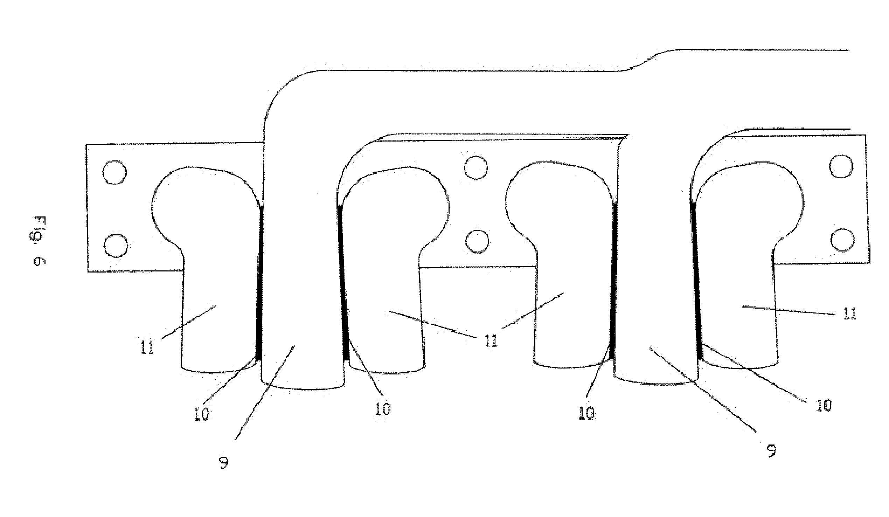

The combustion gases exit through the modified exhaust manifold (Figure 6) towards the cooler (Figure 1) that has at least two added ducts, object of the modification of the manifolds, integrally fixed to the outlet ducts to allow heating thereof and to be able to eliminate the residual water present in liquid phase when the gases return from oil filter (Figure 5) by vaporization.

The operation of the water cooler (Figure 1) is based on a double heat exchanger pipe (1) preferably made of copper and having a diameter suitable to the volume of gases from each engine that enters the system for the treatment of gases through its top portion and produces the pre-cooling of the gases by means of a double coil (2), ending inside the capsule (4), where the gases are released through outlets (3), bubbling and dispersion of the gases in small bubbles taking place, forcing them to pass through a multi-perforated plate (5), a drop in temperature of the gases being caused due to the passage of the water, which is introduced and removed by means of respective connections (17), for the gases to finally exit through the top portion (6), concentrated by a hood (7), on the way towards the modified manifold (Figure 6).

Figure 1 shows a system for controlling a level of water which is not specified therein, the purpose of which is simply to maintain the same level of water, as well as a temperature control device so that the cooling water is maintained at an optimal temperature allowing it to carry out its function upon entering and exiting the ducts (17) intended for water circulation coming from the corresponding radiator.

The assembly of Figure 1 has a blind cap with a hermetic sealing that allows control and maintenance of the residues.

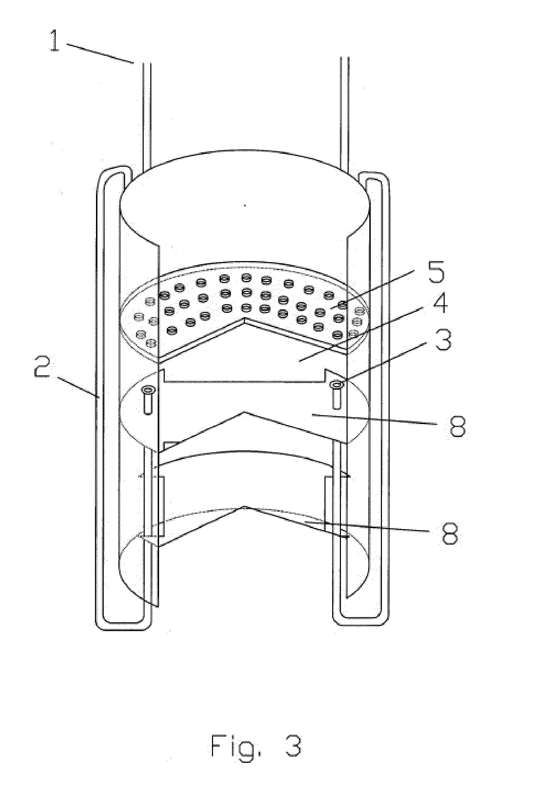

There is a gap between the filter depicted in Figure 3 and the hood (7) due to the difference in diameters between them which allows water circulation, as shown in Figure 1.

Sheets (8) are arranged by way of dividers to prevent the backflow of gases in the outlet 3.

The outlet gases in the pipe (6) are again directed towards the modified manifold (Figure 6), said gases entering through the ducts (9), as shown in Figure 6, where any remaining residual liquid water is intended to be eliminated by means of the temperature increase that is obtained from the exchange of heat. The ducts (9) coming from duct 6, which is already branched, are integrally attached (10) to the outlets (11) of the manifold.

Once the gases pass through the ducts integral with the manifold, they go towards the oil filter depicted in Figure 5.

The preferably steel sheet or fiber filter consists of a container with fibers or sheets (12) soaked in oil. Once the gases enter through the opening (13), they are released due to the actual pressure through the holes (14) of the base of the filter into a chamber to subsequently enter the zone where the fibers or mesh for reducing the pollutant particles are located. Once the gases have already gone through the mesh (12), they exit through the holes (15), continue through the outlet duct (16) linked with the conventional ducts to be expelled to the exterior, free of temperature and hazardous particles.

The connections between the different elements consisting of the gas pipelines will be manufactured according to each engine model.

## Claims

1. A system for the treatment of exhaust gases from an internal combustion engine, **characterized by** being previously placed or inserted in the conventional expulsion system and being made up of three steps through which the expulsion gases are flowed, where the first step consists of a filter containing water with a radiator included; the second step consists of adding one or several ducts (9) attached integrally to the outlets (11) of the exhaust gas manifold, and the third consists of a preferably metal mesh filter soaked in oil.

2. The system for the treatment of exhaust gases from an internal combustion engine according to claim 1, **characterized in that** the filter containing water constituting the first step of the system consists of a tank preferably having a circular section, incorporating
- two holes (17) for the entrance and exit of cooling water, located on the cylindrical perimetral surface, and with an opening in the top lid of the cylindrical tank through which there are introduced pipes (2) of the coil and the duct (6) used for discharging the already cooled expulsion gases, on the way to the manifold, according to Figure 6, to which they will be linked through the ducts (9);
- one or several coils (2) through which expulsion gases flow from the engine, arranged such that the exchange of heat between the gases and the cooling water is allowed, and they discharge the gases in the middle of the capsule (4), after the pipes (2) have been introduced through the bottom portion of this capsule (4);
- a hood (7) for reducing the outlet section of the gases coming out of the cooler which is coupled to the capsule (4) and discharges into the duct (6), with the additional feature that the diameter of the constant section of this part is greater than the diameter of the capsule (4);
- a capsule (4) where gases from the engine are discharged through the outlets (3) of the ducts (2), incorporating upstream from the discharge of the gases a multi-perforated plate (5) and incorporating downstream from same plates or sheets (8), by way of dividers, which do not cover the entire section of the capsule (4) where they are located.

3. The system for the treatment of exhaust gases from an internal combustion engine according to claims 1 and 2, **characterized in that** the exhaust manifold shown in Figure 6 comprises one or several return pipes (9) for the gases from the water cooler, attached integrally to the outlet pipes (11) of the engine.
